# EUROPEAN PATENT SPECIFICATION

(11) **EP 3 452 196 B1**
(45) Date of publication and mention of the grant of the patent: **19.04.2023**
(21) Application number: 17792623.5
(22) Date of filing: 24.01.2017
(51) Int. Cl.: B01D 15/20, G01N 30/89, G01N 21/94

(54) **METHOD FOR MONITORING OF FOULANTS PRESENT ON CHROMATOGRAPHIC RESINS USING FLUORESCENCE PROBE**
VERFAHREN ZUR ÜBERWACHUNG VON FAULUNGEN AUF CHROMATOGRAFISCHEN HARZEN MIT EINER FLUORESZENZSONDE
PROCÉDÉ DE SURVEILLANCE DE SALISSURES PRÉSENTÉS SUR DES RÉSINES CHROMATOGRAPHIQUES À L'AIDE D'UNE SONDE À FLUORESCENCE

(30) Priority: 03.05.2016 IN 201611015421
(43) Date of publication of application: 13.03.2019
(73) Proprietor: Indian Institute of Technology Delhi, New Delhi Delhi 110016 (IN)
(72) Inventor: RATHORE, Anurag S., New Delhi 110016 (IN); PATHAK, Mili, New Delhi 110016 (IN); CHOPDA, Viki, New Delhi 110016 (IN)
(74) Representative: Gassner, Birgitta
(86) International application number: PCT/IN2017/050035
(87) International publication number: WO 2017/191652

(56) References cited:
- US-A1- 2010 127 860
- US-A1- 2011 147 312
- US-B2- 8 144 330
- LI HAIBO ET AL: "Fouling of anion exchange resin by fluorescence analysis in advanced treatment of municipal wastewaters", WATER RESEARCH, ELSEVIER, AMSTERDAM, NL, vol. 66, 28 August 2014 (2014-08-28), pages 233-241, XP029082566, ISSN: 0043-1354, DOI: 10.1016/J.WATRES.2014.08.027
- MAXIME BOULET-AUDET ET AL: "In-column ATR-FTIR spectroscopy to monitor affinity chromatography purification of monoclonal antibodies", SCIENTIFIC REPORTS, vol. 6, no. 1, 29 July 2016 (2016-07-29), XP55643863, DOI: 10.1038/srep30526
- EDWARD J CLOSE ET AL.: 'Fouling of an anion exchange chromatography operation in a monoclonal antibody process: Visualization and kinetic studies' BIOTECHNOL BIOENG vol. 110, no. 9, September 2013, pages 2425 - 2435, XP055123758

## Description

### FIELD OF THE INVENTION

The present invention relates to a foulant monitoring method in chromatography and more particularly, to a method for fluorescence based real-time monitoring of foulants present on a chromatographic resin.

### BACKGROUND OF THE INVENTION

Chromatography is a widely used method for protein separation. Chromatographic separation is performed under both product binding and non-binding (impurity binding) mode. Chromatographic separation forms an integral purification step in biotherapeutic manufacturing. Although, this step is popular for its efficient separation principles, it is also arguably the most expensive step of the purification process. In a typical platform process for the production of mAb therapeutics, approximately 80% of the total process costs are for the steps following fermentation, of which up to 60% of the downstream costs come from chromatography. Further, in case of Protein A chromatography the resulting cost of resin required to pack a manufacturing column can be in excess of $1 million. As a result, process economics dictates that the resins be recycled and reused over an extended period multiple times during processing with the number of reuses ranging from 50 times to as many as 200 times without hampering its chemical and physical properties (Rathore et. a. 2015).

In general, the maximum number of reuses for a given chromatographic stationary phase is product specific and depends on a variety of factors including the resin used, the placement of the chromatography step in the process, the level and nature of impurities the resin comes in contact with, the product itself and the nature of the strip, regeneration and column storage solutions used.

It is well known that the clearance capacity of the resin reduces significantly over reuse and this impacts product yield as well as quality. This is particularly true in the case of Protein A chromatography, a workhorse in monoclonal antibody and Fc fusion protein purification processes, as the feed material for this step is the cell culture broth which contains a myriad of impurities along with the product of interest. The challenge is to ensure that the performance of chromatographic resin does not slip below the threshold throughout entire lifecycle usage of the resin.

Recent evidence suggests that other performance attributes of chromatographic stationary phases such as step yield, host cell impurity clearance capability, virus clearance capability and DNA clearance capability degrade with reuse. The ability of chromatographic column to clear adventitious viruses may be reduced over time, blocking access to surface ligands due to various impurities or residual products, leaching or degradation of ligands over time are few additional concerns (Steinmeyer and McCormick, 2008).

It is important to ensure the performance of chromatographic resin remains up to par so that predetermined quality and safety attributes can be achieved throughout entire lifecycle usage of the resin. Regulatory agencies mandate prospective establishment of limits on the number of times a chromatography resin can be used in manufacturing. Static and dynamic binding assays can quantify the binding capacity, however such analysis only provides information on the loss of function. The main reason for loss in capacity is the deposition of impurities and/or residual product on the resin. This may result in either blocking of the pores and/or may interfere with protein binding on the ligands present on the resin surface.

Till date, the extent of fouling is measured indirectly through monitoring of product yield and quality. Many researchers have also performed offline analysis of the resin to monitor fouling using advanced analytical tools such as FTIR (Boulet et. al. 2016) and LC-MS/MS (Lintern et al. (2016). J Chromatogr A. Aug 26;1461:70-7) or CLSM and TEM (Zhang et. al. (2016). Biotechnol Bioeng. Jan;113(1):141-9). However, this kind of analysis can only be applied for retrospective investigations and cannot be used during production. Most of the chromatographic systems have online monitoring tools such as UV absorbance, conductivity and pH probes to monitor only the flow-stream at the outlet of the column and not direct real time monitoring of foulants deposited on the resin.

US2011147312 describes automated systems and methods for monitoring column performance in process chromatography. The column performance is monitored by generating a plurality of process values such as, for example, conductivity values or pH values with a detector during a chromatography step transition between a first mobile phase liquid and a second mobile phase liquid. The displayed performance parameters enable an operator to make a determination, for example, regarding the quality of the chromatography column packing and whether to continue the chromatography process or stop the chromatography process until the chromatography column can be repacked or replaced.

A resin fouling index (RFI) was established by Li H. ((2014). Water Res. Dec 1;66:233-241) according to the decrease of dissolved organic carbon (DOC) removal after regeneration of the resin for an advanced treatment of municipal wastewater. By using the fluorescent characteristics of the protein-like substances as a label, these substances were identified as cause of the fouling.

Thus, no mechanism exists at present to do this monitoring in real time. An approach that allows for online real time monitoring of fouling is still awaited and that there is no technique available to monitor foulants directly on the resin.

Thus, currently there is no tool that can directly monitor foulant deposition during the chromatographic process in a real time. Accordingly, there is need for a method for direct measurement of the foulants present on resins that can facilitate the use of appropriate cleaning conditions at the right time to clear the foulants deposited on the resin and overcomes all the above mentioned drawbacks.

### SUMMARY OF THE INVENTION

The present invention provides a method for monitoring of foulants present on chromatographic resins using fluorescence probe. The method in an initial step comprises packing a chromatographic column with a fresh chromatographic resin. The resin packed chromatographic column is washed and an initial reading of fluorescence intensity of the chromatographic resin is measured. The column is washed in a predefined sequence using a solution selected from the group consisting of a wash buffer, an equilibration buffer, a clarified broth, a protein sample, an elution buffer and a cleaning buffer. The column is then subjected for protein purification followed by excitation of the column at a predefined wavelength. The final reading of fluorescence intensity is measured at a predefined wavelength. The predefined wavelength used for column excitation and measurement of the final reading is in a range of 250nm to 500nm. The foulant deposited on the column is determined by subtracting the initial reading from the final reading of the fluorescence intensity.

In the context of the present invention, the monitoring of foulants is carried out in a real time using a set up. The set up includes at least one column and a fluorescent measuring unit. The at least one column includes a column holder. The column holder includes a black sheet that surrounds the column. The fluorescent measuring unit includes a light source, an excitation monochromator, a slit, a polarizer, a sample chamber, an emission monochromator and a detector.

### BRIEF DESCRIPTION OF THE DRAWINGS

FIG. 1A is a schematic drawing of a setup for real time monitoring of foul ants, in accordance with the present invention;
FIG. 1B shows a schematic drawing of a fluorescent measuring unit of the set up of FIG. 1, in accordance with the present invention;
FIG. 2A-2B are graphical representations of real time monitoring of reused resin, in accordance with the present invention;
FIG. 3A- 3B are graphical representations showing emission spectra of fresh and fouled resin for protein A purification of IgG4 and IgG1 molecule, in accordance with the present invention;
FIG. 4A- 4B are graphical representations showing percent ligand degradation and foulant clearance using single step cleaning and two step cleaning procedure, in accordance with the present invention;
FIG. 5A is a graphical representation showing emission spectra of fresh and fouled multimode cation exchange resin for purification of recombinant human serum albumin (HSA) produced in *Pichia pastoris,* in accordance with the present invention;
FIG. 5B is a graphical representation showing emission spectra of fresh and fouled multimodal hydrophobic interaction chromatography resin during recombinant human granulocyte colony stimulating factor (GCSF) purification, in accordance with the present invention; and
FIG. 5C is a graphical representation showing emission spectra of fresh and fouled cation exchange chromatography resin during mAb purification, in accordance with the present invention;

### DETAILED DESCRIPTION OF THE INVENTION

The invention described herein is explained using specific exemplary details for better understanding. However, the invention disclosed can be worked on by a person skilled in the art without the use of these specific details.

References in the specification to "one embodiment" or "an embodiment" means that a particular feature, structure, characteristic, or function described in connection with the embodiment is included in at least one embodiment of the invention. The appearances of the phrase "in one embodiment" in various places in the specification are not necessarily all referring to the same embodiment.

References in the specification to "preferred embodiment" means that a particular feature, structure, characteristic, or function described in detail thereby omitting known constructions and functions for clear description of the present invention.

In general aspect, the present invention describes a method for a real time fluorescence monitoring of foulants present on a chromatographic resin. The method comprises direct measurement of absorbance and fluorescence of the foulants present on the chromatographic resin. The method of the present invention is used by a user to choose appropriate cleaning conditions for clearing the foulants deposited on the resin. The method of the present invention is applicable to all types of chromatography.

The present invention is illustrated with reference to the accompanying drawings, throughout which reference numbers indicate corresponding parts in the various figures.

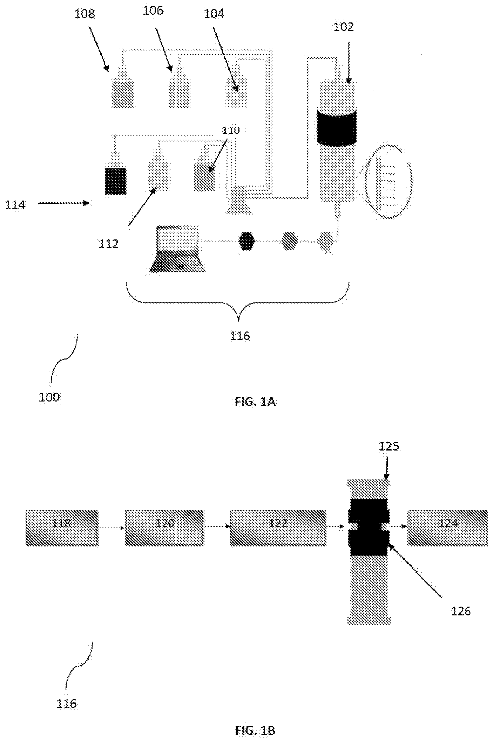

Referring to FIG. 1A and FIG. 1B, in one aspect, a setup 100 for fluorescence monitoring of foulants in accordance with the present invention is shown. The setup 100 comprises at least one column 102, a first container 104, a second container 106, a third container 108, a fourth container 110, a fifth container 112, a sixth container 114, and a fluorescent measuring unit 116.

The at least one column 102 has a column holder 125. The column holder includes a black sheet 126 that surrounds the column 102 with a specified window space to detect the foulants present on the resin. The column holder 125 is adapted to measure the foulants present on the chromatographic column 102.

The first container 104 contains a wash buffer, the second container 106 contains an equilibration buffer, the third container 108 contains a storage buffer, the fourth container 110 contains a Cleaning-in-place buffer *(hereinafter, CIP)* and/or regeneration buffer, the fifth container112 contains an elution buffer and the sixth container 114 contains a clarified broth and/or protein solution.

As shown in Fig. 1B, the fluorescent measuring unit 116 comprises a light source 118, an excitation monochromator (not shown), a slit, a polarizer 120, a sample chamber (not shown), an emission monochromator 122 and a detector 124.

In an embodiment, the light source 118 is Xenon light. The sample chamber is designed to measure the foulants present on the chromatographic column 102. The light emitted by the light source 118 is transferred to the slit and the polarizer 120 through the excitation monochromator. The slit and the polarizer 120 transmit light of a predefined wavelength to the emission monochromator 122. The predefined wavelength emitted by the emission monochromator 122 is passed through the black sheet of the column 102 packed with resin thereby resulting in the recording of fluorescence intensity by the detector 124.

In another aspect, the present invention provides a method for monitoring of foulants present on chromatographic resins using fluorescence probe. Specifically, the method is described in conjunction with FIG. 1A and FIG. 1B. The method in an initial step comprises packing the column 102 with a fresh chromatographic resin.

In a next step, the method involves washing the resin packed chromatographic column 102. The column 102 is washed in a predefined sequence using a solution selected from the group consisting of a wash buffer, an equilibration buffer, a clarified broth, a protein sample, an elution buffer and a cleaning buffer.

In the context of the present invention, the column 102 packed with the resin is subjected to a first wash with the wash buffer followed by a second wash with the equilibration buffer. The column 102 is again subjected to a third wash with the wash buffer. Thereafter, the equilibration buffer is passed through the column 102 packed with the resin followed by the clarified broth 114. The column 102 is then subjected to wash with the wash buffer. The column 102 is then subjected to an elution by using the elution buffer. The CIP buffer and/or regeneration buffer is passed through the column 102 and the column 102 is again washed with wash buffer. The column 102 is stored by passing storage buffer there through when not in use. The storage buffer is removed from the column 102 for next time use and the resin is further washed and equilibrated using the wash buffer and the equilibration buffer. The equilibration, sample loading, washing and elution are repeated in every cycle.

In the next step, the method involves measuring an initial reading of fluorescence intensity of the chromatographic resin. In the next step, the method involves subjecting the column for protein purification.

In the next step, the method involves exciting the column 102 at a predefined wavelength and measuring the final reading of fluorescence intensity at a predefined wavelength. The predefined wavelength used for column excitation and measurement of the final reading is in a range of 250nm to 500nm.

In the next step, the method involves determining the foulant deposited on the column by subtracting the initial reading from the final reading of fluorescence intensity. Specifically, the fluorescence intensity is recorded at every cycle and the deposition of foulants is estimated by subtracting the reading obtained for the freshly packed column102 with fresh chromatographic resin that is taken at the start of the run. The increase in the amount of fluorescence intensity at the end of respective cycles estimated the deposition of foulants on the resin over reuse. The foulant deposition on the resin over cycling is monitored by the fluorescent measuring unit 116 as shown in FIG. 1B. The user decides that number of cycles when the intensity needs to be taken.

In the context of the present invention, the column 102 packed with resin is connected to the fluorescent measuring unit 116 for recording the stability of three signals, namely the UV, pH and conductivity signals during the third wash with the wash buffer 106. Further, the column excitation is recorded at 250nm to 500nm and emission spectra or a single point reading is recorded at 250nm to 500nm for fresh resin.

The method of the present invention is applicable to all types of protein purification protocols on different types of column chromatography. The wash buffer, equilibrium buffer, elution buffer, CIP buffer, storage buffer and the clarified broth is selected from the groups shown in the table below depending upon the type of protein and column chromatography.

| **Sr. No.** | **Steps** | **Monoclonal antibody (Protein A chromatography)** | **Monoclonal antibody (Cation exchange chromatograph y)** | **Human serum albumin (Multimode cation exchange chromatography)** | **Recombinant human granulocyte colony stimulating factor (Multimode hydrophobic interaction chromatography)** |
|---|---|---|---|---|---|
| 1 | **Wash buffer and column volume (CV)** | Milli Q and 25mM acetate pH 5.5-6.5 + 50-150mM NaCl (5-7 CV) | Milli Q and 25mM acetate pH 5.5-6.5 (5-7 CV) | Milli Q and 25mM acetate pH 5.0-5.5 + 10mM NaCl (5-7 CV) | Milli Q and 35mM acetate pH 5.3 + 350mM NaCl (5-7 CV) |
| 2 | **Equilibrati on buffer and column volume** | 25mM acetate pH 5.5-6.5 + 50-150mM NaCl (5-7 CV) | 25mM acetate pH 5.5-6.5 (5-7 CV) | 25mM acetate pH 5.0-5.5 + 10mM NaCl, 25mM acetate pH 4.5 + 1M NaCl (5-7 CV) | 35mM acetate pH 5.3 + 350mM NaCl (5-7 CV) |
| 3 | **Elution buffer and column volume** | 100mM acetate buffer pH 3.5 (4-7 CV) step gradient | 25mM acetate pH 5.5-6.5 + 200-500mM NaCl . (15 CV) Linear gradient | 15mM sodium phosphate pH 7.7 + 200mM NaCl. (10 CV) Linear gradient | 100mM acetate pH 4.3, 100mM Citrate pH 3. (15 CV) Linear gradient |
| 4 | **CIP buffer and column volume** | 50mM NaOH + 1M NaCl, 2M NaCl (3CV) | 1M NaCl, 200mM NaOH (5CV) | 0.5-1M NaOH, 1M NaCl (5CV) | 0.5-1M NaOH, 1M NaCl (5CV) |
| 5 | **Storage buffer and column volume** | 20% Ethanol (5-7 CV) | 20% Ethanol + 0.2 M Sodium Acetate (5-7 CV) | 20% Ethanol (5-7 CV) | 20% Ethanol (5-7 CV) |
| 6 | **Protein Sample (protein loaded: 80% of 10% DBC)** | Clarified broth (mAb expressed in CHO cell lines) | Neutralized protein A elute | Clarified broth (mAb expressed in *Pichiapastoris)* | Refold protein solution |

The method of the present invention for measuring the foulants on chromatography resin is applicable for all protein purification chromatographic systems where the untagged protein foulants can be measured within the excitation and emission range of 250 to 500nm. Further, fluorophore labelled foulants on the chromatographic resin are also measured and online monitoring of the fluorophore at respective excitation and emission range are determined.

In the context of the present invention, the novel method for real time fluorescence monitoring of foulants present on chromatographic resin is demonstrated to yield highly reproducible spectra without the need for extensive sample preparation.

### EXAMPLES

The following examples illustrate the invention, but are not limiting thereof.

### Example 1: Monitoring of reused resin for fouling

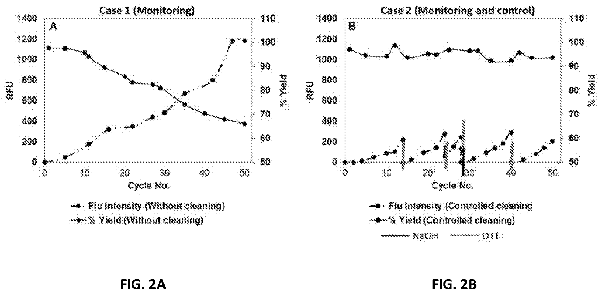

As represented in FIG. 2, a case study of using the method of the present invention to monitor and control the fouling of protein A chromatography is discussed in detail. Initially the fouling of protein A chromatography was monitored without providing intermediate cleaning. The yield was found to decrease with the increase in fluorescence intensity as shown in Fig. 2A. It was observed that once the fluorescence intensity reached above 300 RFU, the yield decreased <90%.

In a second case as shown in Fig. 2B, monitoring and controlling the protein A chromatography fouling was performed to avoid performance loss. The fluorescence intensity was monitored every two cycles and as the fluorescence intensity increased above 200 RFU (excitation at 280nm and emission at 340nm), cleaning was performed with DTT/ DTT followed by NaOH with the contact time of fifteen minutes. Cleaning regimes were established by prior studies. Users decide the cleaning regime, including reagent and contact time based on their experiences. Thus for the second case, the yield was > 90% with the fluorescence intensity <300 RFU (Figure 2B). These results proved that the developed online real time monitoring tool could be utilized to monitor and control chromatography performance loss.

### Example 2: Protein A chromatography for mAb purification

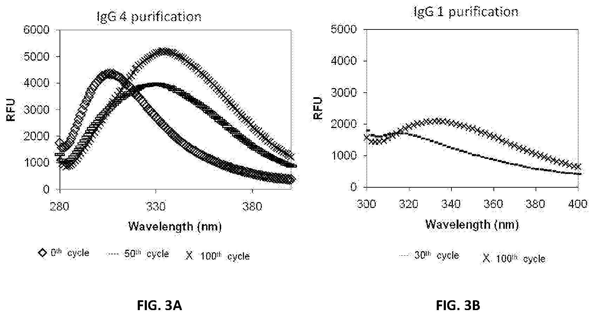

Fig. 3A and Fig. 3B represents the difference in the emission spectra for fresh and fouled resin for protein A purification of IgG4 and IgG1 molecule. The emission lambda maxima for fresh (0^{th} cycle) and fouled protein A resins (50^{th} and 100^{th} cycles) were different (Fig. 3A). For fresh protein A resin (0^{th} cycle), the intensity was least at 340nm as compared to fouled resin (Fig. 3A). The intensity at 340nm increased with increase in number of cycles (Fig. 3A and 3B). Recombinant protein A had tyrosine and phenylalanine residue in its sequence but lacks tryptophan. On the other hand, the foulants (host cell proteins and mAb) had tryptophan along with tyrosine and phenylalanine (detected using LC-MS/MS). Thus, the fluorescence intensity at 340nm was typically due to foulants present on the resin while the fluorescence intensity at 303 nm was due to protein A ligand present on the resin.

### Example 3: Screening for CIP buffers on Protein A chromatography

To evaluate cleaning conditions, fouled resin after 50 cycles was incubated under different cleaning regimens. An incubation time of 15 min was used and this corresponds to the CIP contact time in the column. Cleaning was evaluated for single step and multi-step CIP buffers. The detailed conditions for CIP buffers and their sequence are described in Table 1. All experiments were carried out in triplicates. After cleaning, the resins were monitored for ligand degradation and foulant clearance using fluorescence approach.

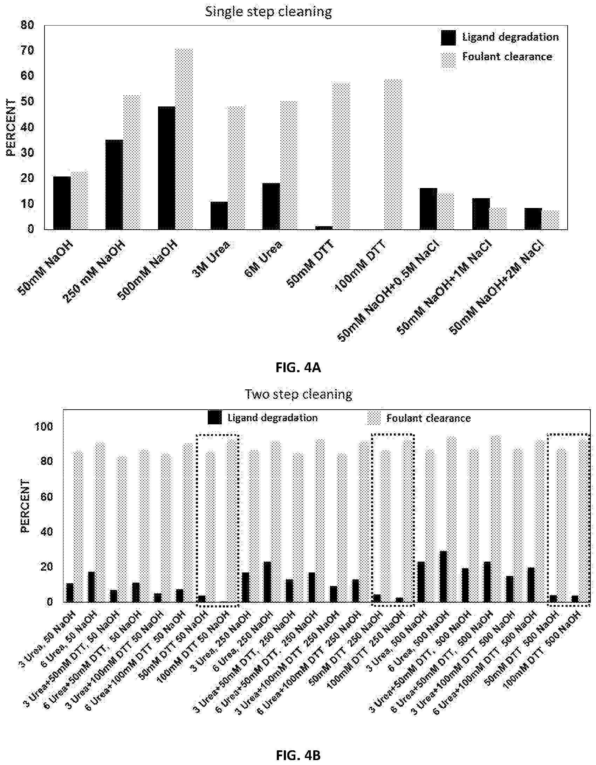

For single step cleaning, resin samples were incubated with different samples of NaOH, urea, and DTT. Effect of salt concentration in combination with NaOH was also evaluated. Figure 4A represents the impact of increasing NaOH concentration on ligand degradation and foulant clearance. With increase in NaOH concentration from 50mM to 500mM, the foulant clearance increased from 20% to 75% whereas the ligand degradation increased from 20% to 50% due to increase in concentration of NaOH from 50mM to 500mM. Addition of salt in the NaOH solution reduced ligand degradation but also reduced foulant clearance. With increase in urea concentration, ligand degradation increased from 10% to 18% and foulant clearance capacity was ~50%. Reducing agents aid in removal of impurities by breaking the disulfide bonds. With the use of DTT, the foulant clearance was ~60% with negligible ligand degradation. Among the three cleaning reagents examined (NaOH, chaotropes and DTT), DTT was found to have a comparable foulant clearance capacity as NaOH, however with negligible ligand degradation as compared to NaOH.

Two step cleaning approaches were also examined using different concentrations of chaotrope, reducing agent and combinations of chaotropes and reducing agents in the first step followed by different NaOH concentration in the second step (Table 1). Urea and DTT followed by NaOH were found to improve foulant clearance. Two step cleaning resulted in foulant clearance capacity >80% in all cases (Figure 4B). Cleaning with reducing agent followed by NaOH resulted in maximum foulant clearance form resin and lower ligand degradation (Conditions highlighted in figure 4B).

**Table 1: List of Different CIP buffers used for single and two step cleaning**

| **Exp No.** | **CIP 1** | **CIP 2** |
|---|---|---|
| 1 | PBS buffer | - |
| 2 | 50mM NaOH | - |
| 3 | 50mM NaOH+0.5M NaCl | - |
| 4 | 50mM NaOH+1M NaCl | - |
| 5 | 50mM NaOH+2M NaCl | - |
| 6 | 250mM NaOH | - |
| 7 | 500mM NaOH | - |
| 8 | 3M Urea | - |
| 9 | 3M Urea | 50mM NaOH |
| 10 | 3M Urea | 250mM NaOH |
| 11 | 3M Urea | 500mM NaOH |
| 12 | 3M Urea+50mM DTT | 50mM NaOH |
| 13 | 3M Urea+50mM DTT | 250mM NaOH |
| 14 | 3M Urea+50mM DTT | 500mM NaOH |
| 15 | 3M Urea+100mM DTT | 50mM NaOH |
| 16 | 3M Urea+100mM DTT | 250mM NaOH |
| 17 | 3M Urea+100mM DTT | 500mM NaOH |
| 18 | 6M Urea | - |
| 19 | 6M Urea | 50mMNaOH |
| 20 | 6M Urea | 250mM NaOH |
| 21 | 6M Urea | 500mM NaOH |
| 22 | 6M Urea+50mM DTT | 50mM NaOH |
| 23 | 6M Urea+50mM DTT | 250mM NaOH |
| 24 | 6M Urea+50mM DTT | 500mM NaOH |
| 25 | 6M Urea+100mM DTT | 50mM NaOH |
| 26 | 6M Urea+100mM DTT | 250mM NaOH |
| 27 | 6M Urea+100mM DTT | 500mM NaOH |
| 28 | 50mM DTT | - |
| 29 | 50mM DTT | 50mM NaOH |
| 30 | 50mM DTT | 250mM NaOH |
| 31 | 50mM DTT | 500mM NaOH |
| 32 | 100mM DTT | - |
| 33 | 100mM DTT | 50mM NaOH |
| 34 | 100mM DTT | 250mM NaOH |
| 35 | 100mM DTT | 500mM NaOH |

Further, Examples 4A, 4B and 4C illustrate case studies of protein purification on a different chromatographic resin which has been disclosed below:

### Example 4A: Multimode cation exchange chromatography for HSA purification

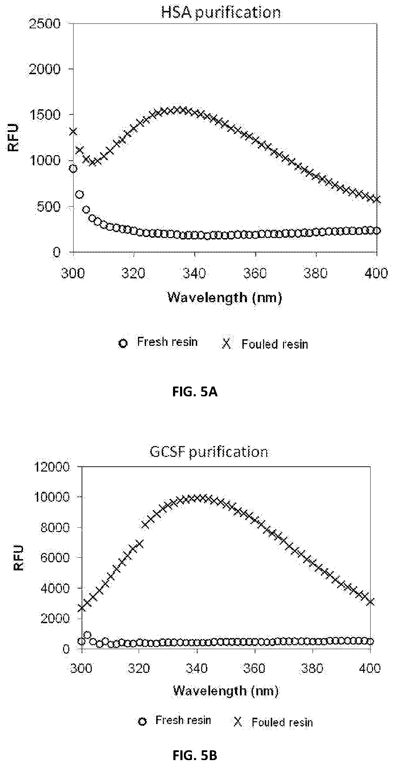

Fig.5A represents the spectra for fresh and fouled multimode cation exchange resin utilized for purification of recombinant human serum albumin (HSA) produced in *Pichia pastoris.* The chromatographic resin utilized in this case consisted of highly cross-linked agarose matrix with a multimodal weak cation exchanger. It was observed that the fresh resin did not show any emission in the range of 300 to 400nm while the fouled resin showed emission spectra in this range indicating deposition of foulants i.e., foulants containing host cell protein and the strongly bound HSA.

### Example 4B: Multimode hydrophobic interaction chromatography for GCSF purification

Fig. 5B represents the comparison of fresh and fouled multimodal hydrophobic interaction chromatography resin during recombinant human granulocyte colony stimulating factor (GCSF) purification. The resin consisted of a highly cross-linked cellulose matrix with hexylamine and phenylpropanolamine synthetic ligands. It was observed that the fresh resin did not show any emission in the range of 300 to 400nm while the fouled resin showed emission spectra in this range indicating deposition of foulants i.e., foulants containing host cell protein and the strongly bound GCSF.

### Example 4C: Cation exchange chromatography for mAb purification

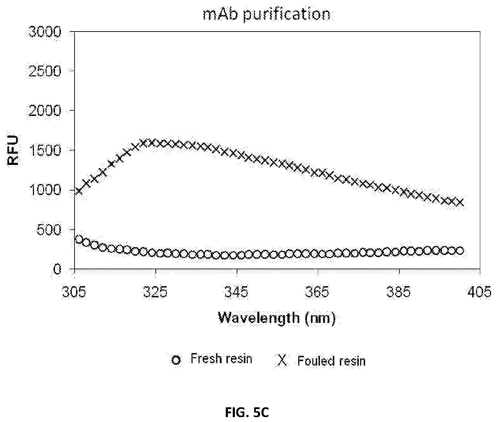

Fig. 5C represents a comparison of fresh and fouled cation exchange chromatography resin during mAb purification. Cation exchange chromatography resin consisted of agarose base with sulfonate ligand. It was observed that the fresh resin did not show any emission in the range of 300 to 400nm while the fouled resin showed emission spectra in this range indicating deposition of foulants i.e., foulants containing host cell protein and the strongly bound mAb.

The method of the present invention facilitates appropriate control of column cleaning thereby resulting in a significant improvement in resin lifetime. Further, the method of the present invention advantageously aims to deliver results without the need of performing tedious and time-consuming column unpacking and repacking.

Further, the method of the present invention advantageously ensures that the performance of the chromatographic resin does not slip below the threshold throughout entire lifecycle usage of the resin. The method of the present invention helps in monitoring foulants directly on the resin. Furthermore, direct monitoring and measurement of the foulants present on the resin can facilitate the use of appropriate cleaning conditions at the right time to clear the foulants deposited on the resin. The method of the present invention is applicable to all types of protein purification protocols on different types of column chromatography.

The set up 100 is utilized for real time monitoring of chromatography fouling. The set up 100 is also utilized for continuous evaluation of the column performance so that column performance can be maintained at par. The set up 100 is also used for screening and selection of cleaning reagents or a combination of cleaning reagents and/or for deciding number and sequence of cleaning steps to be taken to minimize extent of fouling. The set up 100 is utilized to study resin stability in various cleaning regimes. The set up 100 is used as an indicator to optimal utilization of cleaning conditions on protein A chromatography to avoid column performance loss. The set up 100 is utilized for continuous execution of control action to maintain the protein A chromatography yield >90%.

The method and the set up 100 are utilized to set an upper limit for carrying out cycling study to an acceptable performance level. The method and the set up 100 are utilized not only to monitor foulants species but also resin Protein A ligand in case of mAb purification. The method and the set up 100 are utilized to track foulants deposited on column in multimode cation exchange chromatographic purification of recombinant human serum albumin from *Pichia pastoris.* The method and the set up 100 are utilized to track foulants deposited on column in multimode hydrophobic interaction chromatographic purification of recombinant GCSF. The method and the set up 100 are utilized to measure the extent of fouling in cation exchange chromatography for mAb purification. The method and the set up 100 are utilized to monitor fouling in all types of chromatography process.

## Claims

1. A method for monitoring of foulants present on chromatographic resins using fluorescence probe, the method comprising the steps of:
packing a chromatographic column (102) with a fresh chromatographic resin, wherein the column (102) has a column holder (125), which includes a black sheet (126) that surrounds the column (102) with a specified window space to detect the foulants present on the resin;
washing the resin packed chromatographic column (102);
measuring an initial reading of fluorescence intensity of the chromatographic resin;
subjecting the column (102) for protein purification;
exciting the column (102) at a predefined wavelength and measuring the final reading of fluorescence intensity at a predefined wavelength; and
determining the foulant deposited on the column (102) by subtracting the initial reading from the final reading of fluorescence intensity.

2. The method as claimed in claim 1, wherein the column is washed in a predefined sequence, and wherein at least two solutions selected from the group consisting of a wash buffer, an equilibration buffer, a clarified broth, an elution buffer, storage buffer and a cleaning buffer are used.

3. The method as claimed in claim 1, wherein the predefined wavelength used for column excitation and measurement of the final reading is in a range of 250nm to 500nm.

4. The method as claimed in claim 1, wherein the monitoring of foulants is carried out in a real time using a set-up (100), the set-up (100) includes at least one column (102) and a fluorescent measuring unit (116).

5. The method as claimed in claim 4, wherein the at least one column (102) includes a column holder (125), the column holder includes a black sheet (126) that surrounds the column.

6. The method as claimed in claim 4, wherein the fluorescent measuring unit includes a light source (118), an excitation monochromator, a slit, a polarizer (120), a sample chamber, an emission monochromator (122) and a detector (124).

## Patentansprüche

1. Verfahren zur Überwachung von Ablagerungen, die auf chromatographischen Harzen vorliegen, unter Verwendung einer Fluoreszenz-Sonde, wobei das Verfahren die Schritte umfasst:
Packen einer chromatographischen Säule (102) mit einem frischen chromatographischen Harz, wobei die Säule (102) einen Säulenhalter (125) aufweist, der ein schwarzes Flächenmaterial (126) beinhaltet, welches die Säule (102) mit einem vorgegebenen Fensterraum zur Erkennung der auf dem Harz vorliegenden Ablagerungen umgibt;
Waschen der mit Harz gepackten chromatographischen Säule (102) ;
Messen einer anfänglichen Ablesung der Fluoreszenzintensität des chromatographischen Harzes;
Einsetzen der Säule (102) für die Protein-Aufreinigung;
Anregen der Säule (102) mit einer vordefinierten Wellenlänge und Messen der finalen Ablesung der Fluoreszenzintensität bei einer vordefinierten Wellenlänge; und
Bestimmen der Ablagerung, die sich auf der Säule (102) abgelagert hat, durch Subtrahieren der anfänglichen Ablesung von der finalen Ablesung der Fluoreszenzintensität.

2. Verfahren nach Anspruch 1, wobei die Säule in einer vordefinierten Sequenz gewaschen wird, und wobei mindestens zwei Lösungen ausgewählt aus der Gruppe bestehend aus einem Waschpuffer, einem Äquilibrierungspuffer, einer geklärten Brühe, einem Elutionspuffer, einem Lagerungspuffer und einem Reinigungspuffer verwendet werden.

3. Verfahren nach Anspruch 1, wobei die vordefinierte Wellenlänge, die für die Säulenanregung und Messung der finalen Ablesung verwendet wird, in einem Bereich von 250 nm bis 500 nm liegt.

4. Verfahren nach Anspruch 1, wobei die Überwachung von Ablagerungen in Echtzeit unter Verwendung einer Einrichtung (100) durchgeführt wird, wobei die Einrichtung (100) mindestens eine Säule (102) und eine Fluoreszenz-Messeinheit (116) beinhaltet.

5. Verfahren nach Anspruch 4, wobei die mindestens eine Säule (102) einen Säulenhalter (125) beinhaltet, wobei der Säulenhalter ein schwarzes Flächenmaterial (126) beinhaltet, das die Säule umgibt.

6. Verfahren nach Anspruch 4, wobei die Fluoreszenz-Messeinheit eine Lichtquelle (118), einen Anregungs-Monochromator, einen Schlitz, einen Polarisator (120), eine Probenkammer, einen Emissions-Monochromator (122) und einen Detektor (124) beinhaltet.

## Revendications

1. Procédé de surveillance des salissures présentes sur des résines chromatographiques à l'aide d'une sonde à fluorescence, le procédé comprenant les étapes de :
garnissage d'une colonne chromatographique (102) avec une résine chromatographique fraîche, dans lequel la colonne (102) comporte un support de colonne (125) qui inclut une feuille noire (126) qui entoure la colonne (102) avec un espace de fenêtre spécifié pour détecter les salissures présentes sur la résine ;
lavage de la colonne chromatographique garnie de résine (102) ;
mesure d'une lecture initiale d'intensité de fluorescence de la résine chromatographique ;
soumission de la colonne (102) à une purification de protéines ;
excitation de la colonne (102) à une longueur d'onde prédéfinie et mesure de la lecture finale d'intensité de fluorescence à une longueur d'onde prédéfinie ; et
détermination de la salissure déposée sur la colonne (102) par soustraction de la lecture initiale de la lecture finale d'intensité de fluorescence.

2. Procédé selon la revendication 1, dans lequel la colonne est lavée selon une séquence prédéfinie, et dans lequel au moins deux solutions choisies dans le groupe constitué par un tampon de lavage, un tampon d'équilibrage, un bouillon clarifié, un tampon d'élution, un tampon de stockage et un tampon de nettoyage sont utilisés.

3. Procédé selon la revendication 1, dans lequel la longueur d'onde prédéfinie utilisée pour l'excitation de la colonne et la mesure de la lecture finale se trouve dans une plage de 250 nm à 500 nm.

4. Procédé selon la revendication 1, dans lequel la surveillance des salissures est effectuée en temps réel à l'aide d'une installation (100), l'installation (100) incluant au moins une colonne (102) et une unité de mesure de fluorescence (116).

5. Procédé selon la revendication 4, dans lequel au moins une colonne (102) inclut un support de colonne (125), le support de colonne incluant une feuille noire (126) qui entoure la colonne.

6. Procédé selon la revendication 4, dans lequel l'unité de mesure de fluorescence inclut une source de lumière (118), un monochromateur d'excitation, une fente, un polariseur (120), une chambre d'échantillon, un monochromateur d'émission (122) et un détecteur (124).
